(19) 
Europäisches Patentamt
European Patent Office
Office européen des brevets

(11) **EP 4 432 459 A1**

(12) **EUROPEAN PATENT APPLICATION**
published in accordance with Art. 153(4) EPC

(43) Date of publication:
**18.09.2024   Bulletin 2024/38**

(21) Application number: **22893059.0**

(22) Date of filing: **20.10.2022**

(51) International Patent Classification (IPC):
**H01M 50/609** $^{(2021.01)}$   **H01M 10/04** $^{(2006.01)}$
**H01M 50/105** $^{(2021.01)}$   **G05D 9/12** $^{(2006.01)}$

(52) Cooperative Patent Classification (CPC):
**G05D 9/12; H01M 10/04; H01M 50/105;**
**H01M 50/609;** Y02E 60/10; Y02P 70/50

(86) International application number:
**PCT/KR2022/016042**

(87) International publication number:
**WO 2023/085636 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2021   KR 20210154280**

(71) Applicant: **LG Energy Solution, Ltd.**
**Seoul 07335 (KR)**

(72) Inventors:
• **LEE, Han Jin**
  **Daejeon 34122 (KR)**
• **CHOI, Yun Kyeong**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **BATTERY CELL STATE MANAGEMENT SYSTEM AND METHOD**

(57)     A battery cell state management system according to an embodiment disclosed herein includes an information obtaining unit configured to obtain information about an injected electrolyte amount of a battery cell and a controller configured to calculate a remaining electrolyte amount of the battery cell based on a discharged electrolyte amount of the battery cell according to at least any one process of a manufacturing process of the battery cell and the injected electrolyte amount. With the battery cell state management system according to an embodiment, it is possible to collect data required for calculating the remaining electrolyte amount in conjunction with a battery cell assembly system performing a manufacturing process and accurately calculate the remaining electrolyte amount inside a process-completed battery cell based on the collected data.

FIG.1

# Description

## [TECHNICAL FIELD]

## CROSS-REFERENCE TO RELATED APPLICATION

This application claims priority to and the benefit of Korean Patent Application No. 10-2021-0154280 filed in the Korean Intellectual Property Office on November 10, 2021, the entire contents of which are incorporated herein by reference.

## TECHNICAL FIELD

Embodiments disclosed herein relate to a battery cell state management system calculating a remaining electrolyte amount of a battery cell, and a battery cell state management method using the battery cell state management system.

## [BACKGROUND ART]

Recently, with the rapid development of the electrical, electronic, communication, and computer industries, the demand for high-performance and high-safety batteries is gradually increasing, and lithium secondary batteries have been widely used in portable electronic devices due to their advantages of long lifespan and large capacity. The lithium secondary batteries are classified into a lithium metal battery and a lithium ion battery using a liquid electrolyte and a lithium polymer battery using a polymer solid battery, depending on the type of an electrolyte, and are classified into a prismatic battery using a prismatic can, a cylindrical battery using a cylindrical can, and a pouch-type battery using a pouch, depending on the type of an exterior material that seals an electrode assembly.

The pouch-type battery is widely used because of having the advantages of high energy density per unit weight and volume, the possibility of thinning and light-weighting of the battery, and the low cost of exterior materials. A manufacturing process of the pouch-type battery includes a degassing process of discharging gas inside the battery, and unlike a cylindrical or prismatic battery having a separate free space for the gas to settle inside the battery cell, the degassing process is essential for the pouch-type battery to remove unnecessary gas inside the pouch. After the degassing process, a folding process of cutting and welding the edge of the pouch is performed.

In the degassing process and the folding process, some of the electrolyte injected into the pouch may be discharged, and when the remaining electrolyte amount is too low, problems may occur in cycle performance, whereas when the remaining amount is too high, safety may decrease. Therefore, it is necessary to manage the remaining electrolyte amount of the battery cell at an appropriate level in the manufacturing process of the polymer battery. However, in the case of a small-size polymer battery, total weight may be measured in the degassing process, whereas it is impossible to inspect all medium- and large-size polymer batteries used in electric vehicles (EVs), such that sampling inspection is conducted only when changes in the process occur. In addition, even in the case of existing small-size polymer batteries, the remaining amount is calculated by considering only a discharged electrolyte amount according to the degassing process, failing to reflect the discharged electrolyte amount according to the degassing process and thus resulting in a significant difference between a calculation result and the actual remaining electrolyte amount.

## [DISCLOSURE]

## [TECHNICAL PROBLEM]

Embodiments disclosed herein aim to provide a battery state management system and method capable of accurately calculating the remaining electrolyte amount inside a battery cell.

Technical problems of the embodiments disclosed herein are not limited to the above-described technical problems, and other unmentioned technical problems would be clearly understood by one of ordinary skill in the art from the following description.

## [TECHNICAL SOLUTION]

A battery cell state management system according to an embodiment disclosed herein includes an information obtaining unit configured to obtain information about an injected electrolyte amount of a battery cell and a controller configured to calculate a remaining electrolyte amount of the battery cell based on a discharged electrolyte amount of the battery cell according to at least any one process of a manufacturing process of the battery cell and the injected electrolyte amount.

According to an embodiment, the manufacturing process of the battery cell may include at least any one of a packaging process of attaching an electrode assembly to a pouch and injecting an electrolyte into the pouch, an activating process of activating a battery cell package having passed through the packaging process, a degassing process of discharging a gas from the battery cell package, and a folding process of cutting a part of the pouch and sealing the pouch.

According to an embodiment, the information obtaining unit may be further configured to obtain information about a weight of the battery cell package into which the electrolyte is injected and a weight of a process-completed battery cell, and the controller may be further configured to calculate the discharged electrolyte amount, based on the weight of the battery cell package into which the electrolyte is injected, the weight of the process-completed battery cell, and a weight of the pouch cut according to the manufacturing process of the battery cell.

According to an embodiment, the controller may be further configured to calculate the weight of the cut pouch based on a scrap length, a whole length, and a number of layers of the cut pouch, and a weight of the pouch per unit area.

According to an embodiment, the controller may be further configured to constantize the weight of the cut pouch for use in calculation of the discharged electrolyte amount.

According to an embodiment, the controller may be further configured to provide remaining electrolyte amount data of the battery cell to a user when the remaining electrolyte amount of the battery cell is less than a first threshold value or exceeds a second threshold value.

According to an embodiment, the first threshold value or the second threshold value may be determined based on the remaining electrolyte amount data of two or more battery cells that are different from the battery cell.

A battery cell manufacturing system according to an embodiment includes a battery cell assembly system configured to perform a manufacturing process of a battery cell and a battery cell state management system configured to manage a remaining electrolyte amount of a battery cell having completed the manufacturing process, in which the battery cell state management system includes an information obtaining unit configured to obtain information about an injected electrolyte amount of a battery cell from the battery cell assembly system and a controller configured to calculate a remaining electrolyte amount of the battery cell based on a discharged electrolyte amount of the battery cell according to at least any one process of a manufacturing process of the battery cell and the injected electrolyte amount.

According to an embodiment, the battery cell assembly system is further configured to perform at least any one of a packaging process of attaching an electrode assembly to a pouch and injecting an electrolyte into the pouch, an activating process of activating a battery cell package having passed through the packaging process, a degassing process of discharging a gas from the battery cell package, and a folding process of cutting a part of the pouch and sealing the pouch.

According to an embodiment, the information obtaining unit may be further configured to obtain information about a weight of the battery cell package into which the electrolyte is injected and a weight of a process-completed battery cell from the battery cell assembly system, and the controller may be further configured to calculate the discharged electrolyte amount, based on the weight of the battery cell package into which the electrolyte is injected, the weight of the process-completed battery cell, and a weight of the pouch cut according to the manufacturing process of the battery cell.

According to an embodiment, the controller may be further configured to provide remaining electrolyte amount data of a battery cell to the battery cell assembly system when the remaining electrolyte amount of the battery cell is less than a first threshold value or exceeds a second threshold value, and the battery cell assembly system may be further configured to modify at least any one process of the manufacturing process of the battery cell based on the remaining electrolyte amount data of the battery cell.

A battery cell state management method according to an embodiment includes obtaining information about an injected electrolyte amount of a battery cell and calculating a remaining electrolyte amount of the battery cell based on a discharged electrolyte amount of the battery cell according to at least any one process of a manufacturing process of the battery cell and the injected electrolyte amount.

According to an embodiment, the calculating of the remaining electrolyte amount of the battery cell may include obtaining information about a weight of the battery cell package into which the electrolyte is injected and a weight of a process-completed battery cell, calculating the discharged electrolyte amount, based on the weight of the battery cell package into which the electrolyte is injected, the weight of the process-completed battery cell, and a weight of the pouch cut according to the manufacturing process of the battery cell, and determining a value obtained by subtracting the discharged electrolyte amount from the injected electrolyte amount as the remaining electrolyte amount of the battery cell.

According to an embodiment, the calculating the discharged electrolyte amount may include calculating the weight of the cut pouch based on a scrap length, a whole length, and a number of layers of the cut pouch, and a weight of the pouch per unit area.

According to an embodiment, the battery cell management method may further include providing remaining electrolyte amount data of a battery cell to a user when the remaining electrolyte amount of the battery cell is less than a first threshold value or exceeds a second threshold value.

There is also provided a computer program stored in a computer-readable recording medium to execute the battery cell state management method according to an embodiment.

[Advantageous Effects]

With a battery cell state management system according to an embodiment, it is possible to collect data required for calculating the remaining electrolyte amount in conjunction with a battery cell assembly system performing a manufacturing process and accurately calculate the remaining electrolyte amount inside a process-completed battery cell based on the collected data.

According to an embodiment, a weight of a pouch cut in a subsequent process may be constantized so as to be automatically calculated, and the discharged electrolyte amount calculated based on the weight may be reflected in calculation of the remaining amount, thereby accurately calculating the remaining electrolyte amount when compared to an existing scheme failing to reflect the discharged electrolyte amount according to the folding process.

As such, by accurately calculating the remaining amount of the electrolyte inside the battery cell, it is possible to prevent a safety problem occurring due to the electrolyte being a lower limit or less or being an upper limit or more.

Moreover, various effects recognized directly or indirectly from the disclosure may be provided.

**[DESCRIPTION OF DRAWINGS]**

In order to more clearly describe technical solutions of embodiments disclosed herein or the prior art, the drawings required in the description of the embodiments are briefly introduced below. It should be understood that the following drawings are for the purpose of explaining the embodiments of the present specification and not for limiting purposes. In addition, representations of some components in the drawings may be exaggerated or omitted for clarity of explanation.

FIG. 1 shows a configuration of a battery cell manufacturing system including a battery cell state management system according to an embodiment.
FIG. 2 shows a configuration of a battery cell package in a state where an electrolyte is injected into a pouch.
FIG. 3 shows a configuration of a battery cell package in a state where a part of a pouch is cut and a part of an electrolyte is discharged according to a degassing process.
FIG. 4 shows a configuration of a battery cell package in a state where a part of a pouch is cut and a part of an electrolyte is discharged according to a folding process.
FIG. 5 is a flowchart of a battery cell state management method according to an embodiment.
FIG. 6 is a flowchart showing in detail a process of calculating a remaining electrolyte amount of a battery cell according to an embodiment.
FIG. 7 is a view for describing a process of calculating a remaining electrolyte amount of a battery cell, according to an embodiment.
FIG. 8 is a flowchart of a battery cell state management method according to another embodiment.

**[MODE FOR INVENTION]**

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

Although terms used herein are selected with general terms popularly used at present under the consideration of functions in the disclosure, the terms may vary according to the intention of those of ordinary skill in the art, custom, or introduction of new technology. In addition, in a specific case, the applicant voluntarily may select terms, and in this case, the meaning of the terms may be disclosed in a corresponding description part of the present specification. Therefore, the terms used herein should be defined not by the simple names of the terms but by the substantial meaning of the terms and the contents throughout the disclosure.

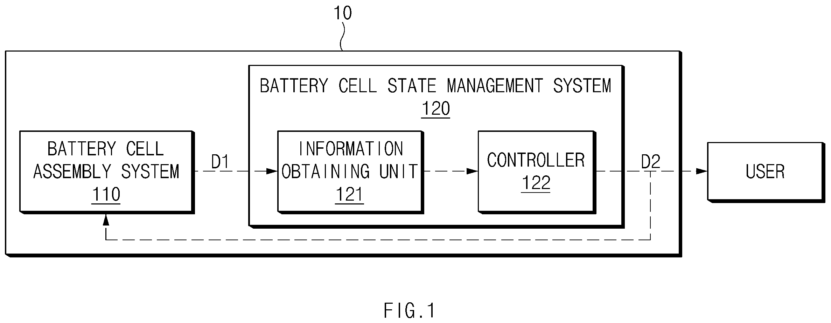

FIG. 1 shows a configuration of a battery cell manufacturing system including a battery cell state management system according to an embodiment.

Referring to FIG. 1, a battery cell manufacturing system 10 according to an embodiment may include a battery cell assembly system 110 for conducting a manufacturing process of a battery cell and a battery cell state management system 120 for calculating the amount of an electrolyte remaining inside the battery cell based on data received from the battery cell assembly system 110. Although not shown, the battery cell manufacturing system 10 according to an embodiment may further include other processing systems essential or selective for manufacturing the battery cell.

The battery cell manufacturing system 110 may perform a packaging process of attaching an electrode assembly to a pouch and injecting an electrolyte into the pouch, an activating process of activating a battery having passed through the packaging process by charging and discharging the battery, a degassing process of discharging gas from the battery cell, and a folding process of cutting a part of the pouch and sealing the same, and include devices for conducting each process.

The electrode assembly may be manufactured by a notching process of making positive and negative tabs of the battery, a stacking process of stacking battery materials, and a tab welding process of connecting the positive and negative tabs, and the packing process may include in detail, a vacuum sealing process of packaging the electrode assembly into a pouch and primarily sealing the pouch.

The electrode assembly may be manufactured by an electrode manufacturing process conducted prior to an assembly process, and have a structure in which a single positive electrode sheet or a plurality of positive electrode sheets where a positive electrode active material is formed in a positive electrode current collector and a single negative electrode sheet or a plurality of negative electrode sheets where a positive electrode active material is formed in a negative electrode current collector are alternately stacked, and the positive electrode sheet and the negative electrode sheet may face each other with a separator sheet therebetween. The pouch, which is an exterior material having the electrode assembly and the electrolyte embedded therein, may determine a form of the battery cell. The pouch may include, for example, a multilayer packaging plastic stacked film having a thickness of 70 to 160 micrometers and a forming depth of 4.5 to 8.0 micrometers. According to an embodiment, the pouch may have the form of an aluminum stacked layer including five layers of 'outer layer film-adhesive-aluminum foil-adhesive-inner layer film'. The structure of the electrode assembly, the size of the pouch, the configuration, etc., may be subject to change in design depending on the purpose and use, and may not be limited to the foregoing description.

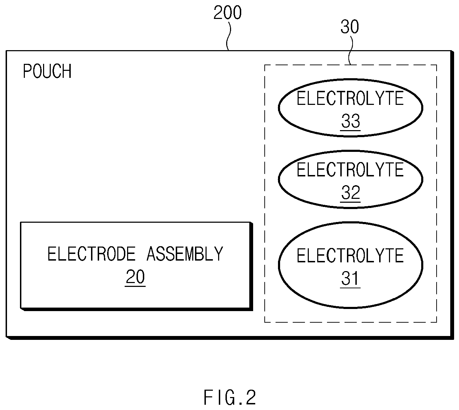

FIG. 2 shows a configuration of a battery cell package in a state where an electrolyte is injected into a pouch. Referring to FIG. 2, in an assembly process conducted by the battery cell assembly system 110, an electrode assembly 20 may be packaged in a pouch 200, and an electrolyte 30 may be injected into the pouch 200. The electrolyte 30 may be, but not limited to, a 1M LiPF$_6$ carbonate-based electrolyte solution. In FIG. 2, the electrolyte 30 is divided into three elements 31, 32, and 33, in which some electrolytes 32 and 33 may be discharged outside the battery cell in a subsequent process and some electrolyte 31 may remain in the battery cell after completion of the process. An embodiment aims to accurately calculate the amount of the electrolyte 31 remaining inside the process-completed battery cell.

In the activation process, the battery may be activated by repeatedly charging and discharging the battery cell assembled by the packaging process. In this case, when overcharge occurs in the activation process, a gas may be generated inside the pouch and the gas may cause a failure of the battery. Thus, the degassing process of discharging the gas generated in the pouch due to over-charge may be performed. Unlike a cylindrical or prismatic battery having a separate free space for the gas to settle inside the battery cell, the degassing process is essential for the pouch-type battery to remove unnecessary gas inside the pouch.

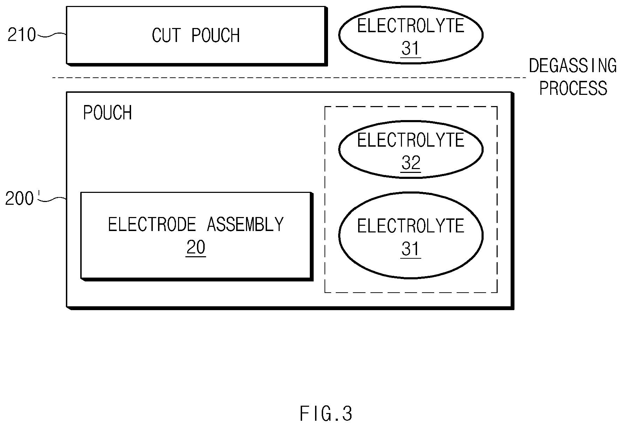

FIG. 3 shows a configuration of a battery cell package in a state where a part (a gas bag) of a pouch is cut and a part of an electrolyte is discharged according to the degassing process. In the degassing process, some pouch 210 is cut away, and in this process, some electrolyte 33 may be discharged together outside the cell (typically, a manufacturer may over-inject the electrolyte in the packaging process in consideration of the electrolyte discharged in the degassing process). The electrolyte may be discharged through a gas discharge hole and may be discharged in a form formed in a cut part of the pouch. After the degassing process, the battery cell package may include the electrode assembly 20 and the electrolytes 31 and 32 that are surrounded by a pouch 200'.

The folding process is a process of sealing the battery cell by folding the outer edge of the pouch leaving only as much as needed. For example, after cutting the edge of the pouch, such as double side folding, a battery cell may be sealed by double folding and thermal compression. Also in this process, some electrolyte may be discharged outside the pouch. For example, the electrolyte may be discharged in a form formed in the pouch cut in the folding process.

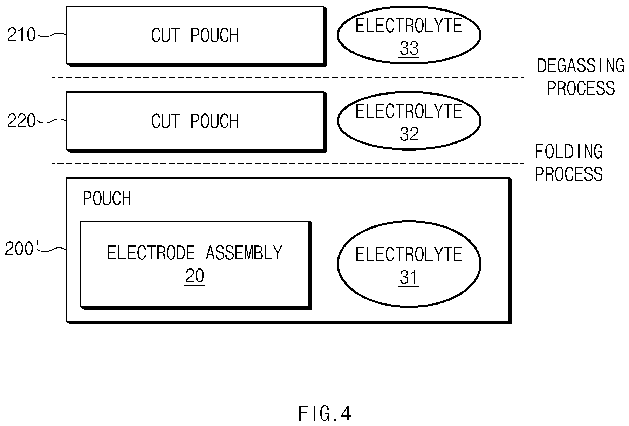

FIG. 4 shows a configuration of a battery cell package in a state where a part of a pouch is cut and a part of an electrolyte is discharged according to a folding process. As is shown, some electrolyte 32 of the electrolytes 31 and 32 remaining after the degassing process may be discharged together with the pouch 220 cut by the folding process. The battery cell having completed the degassing process and the folding process may include the electrode assembly 20 and the electrolyte 31 that are surrounded by a pouch 200".

Referring back to FIG. 1, the battery cell state management system 120 may be configured to calculate the remaining amount 31 of the electrolyte remaining in the battery cell, based on data D1 collected from the battery cell assembly system 110. According to an embodiment, remaining electrolyte amount data D2 of each battery cell may be provided to a user (through a terminal, a server, an internal interface, etc.) or may be provided to the battery cell assembly system 110 to modify or change a manufacturing process.

The battery cell state management system 120 may include an information obtaining unit 121 configured to obtain information required for calculating the remaining electrolyte amount of the battery cell from the battery cell assembly system 110 and a controller 122 configured to calculate the remaining electrolyte amount of the battery cell based on the information.

The information obtaining unit 121 may obtain information such as an injected electrolyte amount of the battery cell, a package weight immediately after injection of the electrolyte, a weight of the process-completed battery cell, etc., from the external system, and the controller 122 may calculate the remaining electrolyte amount based on the discharged electrolyte amount of the battery cell according to at least any one process of the battery cell manufacturing process and the injected electrolyte amount.

Hereinbelow, a process of calculating the remaining electrolyte amount of the battery cell through a battery cell state management method according to an embodiment will be described with reference to the drawings.

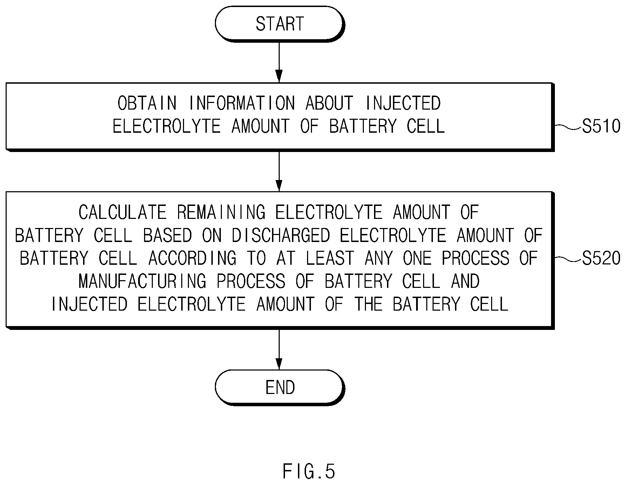

FIG. 5 is a flowchart of a battery cell state management method according to an embodiment.

First, operation S510 of obtaining information about the injected electrolyte amount of the battery cell (e.g., information such as the injected electrolyte amount of the battery cell, the package weight immediately after injection of the electrolyte, the weight of the process-completed battery cell, etc.) may be performed. Operation S510 may be performed by the information obtaining unit 121 included in the battery cell state management system 120.

The information about the injected electrolyte amount may be obtained by measuring a flow rate of the electrolyte passing through a connection point between an injector and a pouch, and electrolyte injection amount data previously registered in the system may be retrieved. The weight of the package into which the electrolyte is injected may be obtained by measuring the weight of the package in an electrolyte injection process (or at an arbitrary point before the subsequent process is performed).

In operation S510, information about the weight of the process-completed battery cell (also called an 'end-of-life (EOL) weight') may be obtained. The process-completed battery cell is a battery cell in a state where a manufacturing process by the battery cell assembly system 110 (an assembly process, a packaging process, an aging process, an activating process, a degassing process, a folding process, etc.) has been completed, and may include the electrode assembly 20 and the remaining electrolyte 31 surrounded by the pouch 200" as shown in FIG. 4. The weight information of the battery cell may be directly received from the battery cell assembly system 110 or may be received from a separate subsequent process system capable of measuring the weight of the battery cell.

Then, operation S520 of calculating the remaining electrolyte amount of the battery cell based on the discharged electrolyte amount of the battery cell according to at least any one process of the manufacturing process of the battery cell and the injected electrolyte amount may be performed.

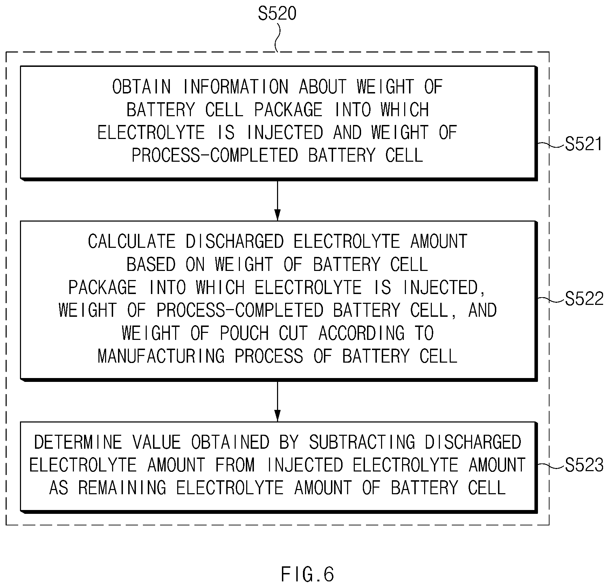

FIG. 6 is a flowchart showing in detail operation S520 of calculating the remaining electrolyte amount of the battery cell.

Referring to FIG. 6, operation S521 of obtaining information about the weight of the battery cell package into which the electrolyte is injected and the weight of the process-completed battery cell, operation S522 of calculating the discharged electrolyte amount based on the weight of the battery cell package into which the electrolyte is injected, the weight of the process-completed battery cell, and the weight of the pouch cut according to the manufacturing process of the battery cell, and operation S523 of determining a value obtained by subtracting the discharged electrolyte amount from the injected electrolyte amount as the remaining electrolyte amount of the battery cell may be sequentially performed.

Operation S521 may be performed by the information obtaining unit 121 and may be performed simultaneously with or subsequently from operation S510 of obtaining the injected electrolyte amount.

According to an embodiment, operation S522 of calculating the discharged electrolyte amount may include an operation of calculating the weight of the cut pouch based on at least one of a scrap length, a full length, and the number of layers of the cut pouch, and the weight of the pouch per unit area.

To calculate the remaining electrolyte amount remaining after the final process, the weight information of the pouch cut according to the degassing process/folding process is required, but in the manufacturing process of the battery cell, it is difficult to individually measure the weight of the pouch (the gas bag) cut for each battery cell.

According to a proposed embodiment, it is possible to automatically calculate the weight of the cut pouch by using information (a full length (mm), the number of layers, a weight (g/mm$^2$) per unit area) previously input in relation to the pouch and scrap length (mm) information of the pouch. According to additional embodiment, to facilitate calculation, the weight of the cut pouch may be constantized and applied to calculation of the remaining electrolyte amount, and for example, an average value of three or more pouch weights calculated in advance may be used.

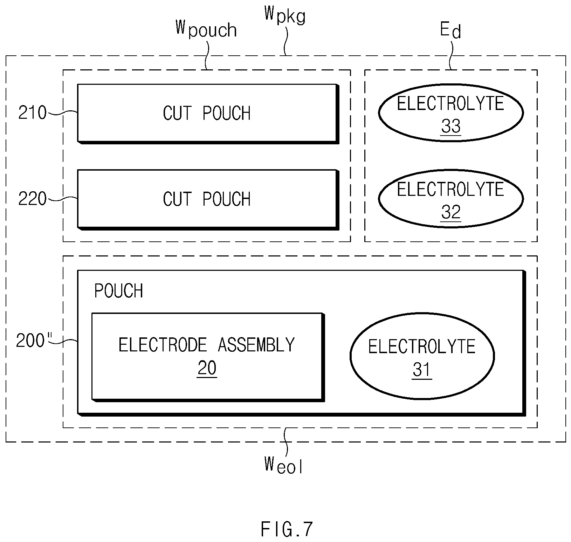

FIG. 7 is a view for describing a process of calculating a remaining electrolyte amount of a battery cell, according to an embodiment. The discharged electrolyte amount according to the manufacturing process may be calculated as below.

[Equation 1]

$$E_d = W_{pkg} - (W_{eol} + W_{pouch})$$

Herein, $E_d$ means the discharged electrolyte amount, $W_{pkg}$ means the weight of the package into which the electrolyte is injected in the packaging process, $W_{eol}$ means the weight of the process-completed battery cell (end of life weight), and $W_{pouch}$ means the weight of the pouch cut by the subsequent process (the degassing process, the folding process, etc.).

Last, in operation S523, a value obtained by subtracting the discharged electrolyte amount from the injected electrolyte amount may be determined as the remaining electrolyte amount of the battery cell. That is, the remaining electrolyte amount may be calculated as below.

[Equation 2]

$$E_r = E_i - E_d$$

Herein, $E_r$ means the remaining electrolyte amount remaining in the battery cell, and $E_i$ means the injected electrolyte amount in the packaging process.

According to the foregoing embodiment, the remaining electrolyte amount remaining in the battery cell after the final process may be relatively accurately calculated. Unlike an existing logic, data may be collected and the remaining electrolyte amount may be calculated in conjunction with the manufacturing system that performs the manufacturing process, and the discharged electrolyte amount according to the folding process (e.g., a DSF process) may be reflected to reduce an error between the calculated remaining electrolyte amount and the actual remaining electrolyte amount. Moreover, the weight of the cut pouch according to the scrap length of the pouch may be automatically calculated by using previously input information, facilitating an operation. The failure of the battery cell may be easily detected based on the accurately calculated remaining electrolyte amount.

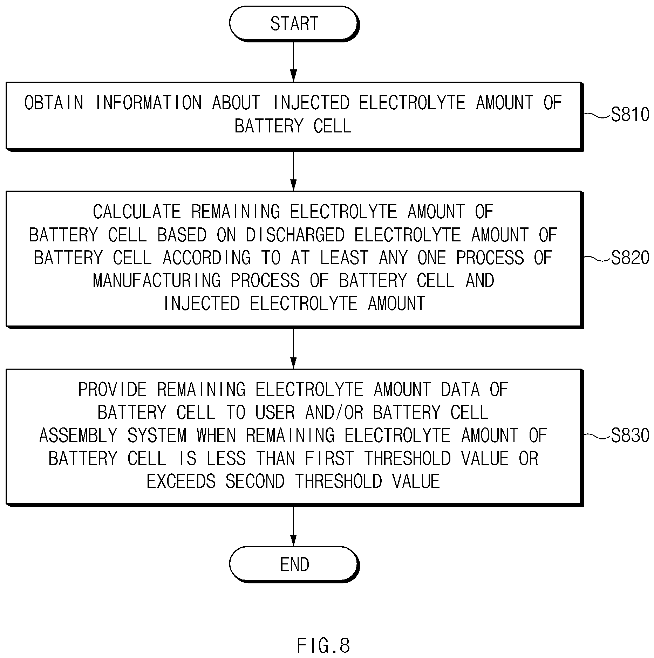

FIG. 8 is a flowchart of a battery cell state management method according to another embodiment. Operation S810 and S820 of the embodiment of FIG. 8 are the same as operations S510 and S520 of the embodiment described with reference to FIG. 5, and thus a redundant description will be omitted.

Referring to FIG. 8, when the remaining electrolyte amount of the battery cell is less than a first threshold value or exceeds a second threshold value, operation S830 of providing the remaining electrolyte amount of the battery cell corresponding to the user and/or the battery cell assembly system may be further performed.

As shown in FIG. 1, when the remaining electrolyte amount calculated by the battery cell state management system 120 is less than a lower limit or exceeds an upper limit, the remaining electrolyte amount data D2 of the battery cell may be transmitted to the user (a user terminal, an external server, an internal output interface, etc.) and/or the battery cell assembly system 110.

According to an embodiment, the first threshold value and/or the second threshold value may be determined based on the remaining electrolyte amount data of two or more battery cells that are different from the battery cell. The remaining electrolyte amount data of the other battery cells may be stored in a storage device inside or outside the battery cell state management system 120, and the system 120 may compare the remaining electrolyte amount of the battery cell with the remaining electrolyte amounts of the other battery cells, stored in the storage device (or an upper/lower threshold value determined based on the same). Thereafter, the remaining electrolyte amount data D2 of the battery cell may be newly stored in the storage device.

The user may determine whether a failure occurs in the battery cell based on the remaining electrolyte amount data D2, and determine that unexpected abnormality occurs in the process and solve the problem in case of repeated failures before and after manufacturing of the battery cell. Alternatively, the internal diagnosis system of the battery cell assembly system 110 may receive the data D2 to find out a problem in the manufacturing process and modify a part of the process.

The battery cell state management method according to the embodiments may be manufactured implemented in the form of an application or a program instruction that is executable through various computer components and recorded in a computer-readable recording medium. The computer-readable recording medium may include a program instruction, a data file, a data structure and the like solely or in a combined manner.

Examples of the computer-readable recording medium may include magnetic media such as hard disk, floppy disk, and magnetic tape, optical media such as compact disk read only memory (CD-ROM) and digital versatile disk (DVD), magneto-optical media such as floptical disk, and a hardware device especially configured to store and execute a program instruction, such as read only memory (ROM), random access memory (RAM) and flash memory, etc.

Examples of the program instructions include a machine language code created by a complier and a high-level language code executable by a computer using an interpreter. The foregoing hardware device may be configured to be operated as at least one software module to perform processing according to the technique of the embodiments, or vice versa.

As proposed in the foregoing embodiment, it is possible to collect data required for calculating the remaining electrolyte amount in conjunction with a manufacturing system of a pouch-type battery cell and accurately calculate the remaining electrolyte amount inside a process-completed pouch-type battery cell based on the collected data. Moreover, a weight of a pouch cut in the folding process may be constantized, and the discharged electrolyte amount calculated based on the weight may be reflected in calculation of the remaining amount, thereby accurately calculating the remaining electrolyte amount when compared to an existing scheme failing to reflect the discharged electrolyte amount according to the folding process. As such, by accurately calculating the remaining amount of the electrolyte inside the battery cell, it is possible to prevent a safety problem occurring due to the electrolyte being a lower limit or less or being an upper limit or more.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

## Claims

1. A battery cell state management system comprising:

   an information obtaining unit configured to obtain information about an injected electrolyte amount of a battery cell; and
   a controller configured to calculate a remaining electrolyte amount of the battery cell based on a discharged electrolyte amount of the battery cell according to at least any one process of a manufacturing process of the battery cell and the injected electrolyte amount.

2. The battery cell state management system of claim 1, wherein the manufacturing process of the battery cell comprises at least any one of:

   a packaging process of attaching an electrode assembly to a pouch and injecting an electrolyte into the pouch;
   an activating process of activating a battery cell package having passed through the packaging process;
   a degassing process of discharging a gas from the battery cell package; and
   a folding process of cutting a part of the pouch and sealing the pouch.

3. The battery cell state management system of claim 2, wherein the information obtaining unit is further configured to obtain information about a weight of the battery cell package into which the electrolyte is injected and a weight of a process-completed battery cell, and
   the controller is further configured to calculate the discharged electrolyte amount, based on the weight of the battery cell package into which the electrolyte is injected, the weight of the process-completed battery cell, and a weight of the pouch cut according to the manufacturing process of the battery cell.

4. The battery cell state management system of claim 3, wherein the controller is further configured to calculate the weight of the cut pouch based on a scrap length, a whole length, and a number of layers of the cut pouch, and a weight of the pouch per unit area.

5. The battery cell state management system of claim 4, wherein the controller is further configured to constantize the weight of the cut pouch for use in calculation of the discharged electrolyte amount.

6. The battery cell state management system of claim 1, wherein the controller is further configured to provide remaining electrolyte amount data of a battery cell to a user when the remaining electrolyte amount of the battery cell is less than a first threshold value or exceeds a second threshold value.

7. The battery cell state management system of claim 6, wherein the first threshold value or the second threshold value is determined based on remaining electrolyte amount data two or more battery cells that are different from the battery cell.

8. A battery cell manufacturing system comprising:

   a battery cell assembly system configured to perform a manufacturing process of a battery cell; and
   a battery cell state management system configured to manage a remaining electrolyte amount of a battery cell having completed the manufacturing process,
   wherein the battery cell state management system comprises:

   an information obtaining unit configured to obtain information about an injected electrolyte amount of a battery cell from the battery cell assembly system; and
   a controller configured to calculate a remaining electrolyte amount of the battery cell based on a discharged electrolyte amount of the battery cell according to at least any one process of a manufacturing process of the battery cell and the injected electrolyte amount.

9. The battery cell manufacturing system of claim 8, wherein the battery cell assembly system is further configured to perform at least any one of:

   a packaging process of attaching an electrode assembly to a pouch and injecting an electrolyte into the pouch;
   an activating process of activating a battery cell package having passed through the packaging process;
   a degassing process of discharging a gas from the battery cell package; and
   a folding process of cutting a part of the pouch and sealing the pouch.

10. The battery cell manufacturing system of claim 9, wherein the information obtaining unit is further configured to obtain information about a weight of the battery cell package into which the electrolyte is injected and a weight of a process-completed battery cell from the battery cell assembly system, and
    the controller is further configured to calculate the discharged electrolyte amount, based on the weight of the battery cell package into which the electrolyte is injected, the weight of the process-completed battery cell, and a weight of the pouch cut according to the manufacturing process of the battery cell.

11. The battery cell manufacturing system of claim 10, wherein the controller is further configured to calculate the weight of the cut pouch based on a scrap length, a whole length, and a number of layers of the cut pouch, and a weight of the pouch per unit area.

12. The battery cell manufacturing system of claim 11, wherein the controller is further configured to constantize the weight of the cut pouch for use in calculation of the discharged electrolyte amount.

13. The battery cell manufacturing system of claim 8, wherein the controller is further configured to provide remaining electrolyte amount data of a battery cell to a user when the remaining electrolyte amount of the battery cell is less than a first threshold value or exceeds a second threshold value.

14. The battery cell manufacturing system of claim 13, wherein the first threshold value or the second threshold value is determined based on remaining electrolyte amount data of two or more battery cells that are different from the battery cell.

15. The battery cell manufacturing system of claim 13, wherein the controller is further configured to provide remaining electrolyte amount data of the battery cell to the battery cell assembly system when the remaining electrolyte amount of the battery cell is less than a first threshold value or exceeds a second threshold value, and
the battery cell assembly system is further configured to modify at least any one process of the manufacturing process of the battery cell based on the remaining electrolyte amount data of the battery cell.

16. A battery cell state management method comprising:

obtaining information about an injected electrolyte amount of a battery cell; and
calculating a remaining electrolyte amount of the battery cell based on a discharged electrolyte amount of the battery cell according to at least any one process of a manufacturing process of the battery cell and the injected electrolyte amount.

17. The battery cell management method of claim 16, wherein the manufacturing process of the battery cell comprises at least any one of:

a packaging process of attaching an electrode assembly to a pouch and injecting an electrolyte into the pouch;
an activating process of activating a battery cell package having passed through the packaging process;
a degassing process of discharging a gas from the battery cell package; and
a folding process of cutting a part of the pouch and sealing the pouch.

18. The battery cell management method of claim 17, wherein the calculating of the remaining electrolyte amount of the battery cell comprises:

obtaining information about a weight of the battery cell package into which the electrolyte is injected and a weight of a process-completed battery cell;
calculating the discharged electrolyte amount, based on the weight of the battery cell package into which the electrolyte is injected, the weight of the process-completed battery cell, and a weight of the pouch cut according to the manufacturing process of the battery cell; and
determining a value obtained by subtracting the discharged electrolyte amount from the injected electrolyte amount as the remaining electrolyte amount of the battery cell.

19. The battery cell management method of claim 18, wherein the calculating the discharged electrolyte amount comprises calculating the weight of the cut pouch based on a scrap length, a whole length, and a number of layers of the cut pouch, and a weight of the pouch per unit area.

20. The battery cell management method of claim 16, further comprising providing remaining electrolyte amount data of a battery cell to a user when the remaining electrolyte amount of the battery cell is less than a first threshold value or exceeds a second threshold value.

EP 4 432 459 A1

10

BATTERY CELL STATE MANAGEMENT SYSTEM
120

BATTERY CELL
ASSEMBLY SYSTEM
110

D1

INFORMATION
OBTAINING UNIT
121

CONTROLLER
122

D2

USER

FIG.1

200                    30

POUCH

ELECTROLYTE
33

ELECTROLYTE
32

ELECTRODE ASSEMBLY
20

ELECTROLYTE
31

FIG.2

210 ── CUT POUCH

ELECTROLYTE
31

DEGASSING
PROCESS

POUCH

200 ──

ELECTRODE ASSEMBLY
20

ELECTROLYTE
32

ELECTROLYTE
31

FIG.3

210 — CUT POUCH    ELECTROLYTE 33

- - - - - - - - - - - - - - - - - - - - - - - - - - - -  DEGASSING PROCESS

220 — CUT POUCH    ELECTROLYTE 32

- - - - - - - - - - - - - - - - - - - - - - - - - - - -  FOLDING PROCESS

POUCH

200" — ELECTRODE ASSEMBLY 20    ELECTROLYTE 31

FIG.4

```
                              ┌─────────────┐
                              │    START    │
                              └──────┬──────┘
                                     │
                                     ▼
┌──────────────────────────────────────────────────────┐
│         OBTAIN  INFORMATION  ABOUT  INJECTED           │
│        ELECTROLYTE  AMOUNT  OF  BATTERY  CELL          ├── S510
└──────────────────────────┬───────────────────────────┘
                           │
                           ▼
┌──────────────────────────────────────────────────────┐
│        CALCULATE  REMAINING  ELECTROLYTE  AMOUNT  OF   │
│  BATTERY  CELL  BASED  ON  DISCHARGED  ELECTROLYTE  AMOUNT  OF │
│  BATTERY  CELL  ACCORDING  TO  AT  LEAST  ANY  ONE  PROCESS  OF ├── S520
│        MANUFACTURING  PROCESS  OF  BATTERY  CELL  AND  │
│      INJECTED  ELECTROLYTE  AMOUNT  OF  THE  BATTERY  CELL │
└──────────────────────────┬───────────────────────────┘
                           │
                           ▼
                    ┌─────────────┐
                    │     END     │
                    └─────────────┘
```

FIG.5

S520

```
┌─────────────────────────────────────────────────┐
│  ┌───────────────────────────────────────────┐  │
│  │  OBTAIN INFORMATION ABOUT WEIGHT OF       │  │
│  │  BATTERY CELL PACKAGE INTO WHICH          │  │───S521
│  │  ELECTROLYTE IS INJECTED AND WEIGHT OF    │  │
│  │  PROCESS-COMPLETED BATTERY CELL           │  │
│  └───────────────────────────────────────────┘  │
│                      │                           │
│                      ▼                           │
│  ┌───────────────────────────────────────────┐  │
│  │  CALCULATE DISCHARGED ELECTROLYTE AMOUNT  │  │
│  │  BASED ON WEIGHT OF BATTERY CELL          │  │
│  │  PACKAGE INTO WHICH ELECTROLYTE IS        │  │───S522
│  │  INJECTED, WEIGHT OF PROCESS-COMPLETED    │  │
│  │  BATTERY CELL, AND WEIGHT OF POUCH CUT    │  │
│  │  ACCORDING TO MANUFACTURING PROCESS OF    │  │
│  │  BATTERY CELL                             │  │
│  └───────────────────────────────────────────┘  │
│                      │                           │
│                      ▼                           │
│  ┌───────────────────────────────────────────┐  │
│  │  DETERMINE VALUE OBTAINED BY SUBTRACTING  │  │
│  │  DISCHARGED ELECTROLYTE AMOUNT FROM       │  │───S523
│  │  INJECTED ELECTROLYTE AMOUNT AS REMAINING │  │
│  │  ELECTROLYTE AMOUNT OF BATTERY CELL       │  │
│  └───────────────────────────────────────────┘  │
└─────────────────────────────────────────────────┘
```

FIG.6

FIG.7

START

OBTAIN INFORMATION ABOUT INJECTED ELECTROLYTE AMOUNT OF BATTERY CELL ~S810

CALCULATE REMAINING ELECTROLYTE AMOUNT OF BATTERY CELL BASED ON DISCHARGED ELECTROLYTE AMOUNT OF BATTERY CELL ACCORDING TO AT LEAST ANY ONE PROCESS OF MANUFACTURING PROCESS OF BATTERY CELL AND INJECTED ELECTROLYTE AMOUNT ~S820

PROVIDE REMAINING ELECTROLYTE AMOUNT DATA OF BATTERY CELL TO USER AND/OR BATTERY CELL ASSEMBLY SYSTEM WHEN REMAINING ELECTROLYTE AMOUNT OF BATTERY CELL IS LESS THAN FIRST THRESHOLD VALUE OR EXCEEDS SECOND THRESHOLD VALUE ~S830

END

FIG.8

## INTERNATIONAL SEARCH REPORT

| | International application No. |
|---|---|
| | **PCT/KR2022/016042** |

**A.    CLASSIFICATION OF SUBJECT MATTER**

**H01M 50/609**(2021.01)i; **H01M 10/04**(2006.01)i; **H01M 50/105**(2021.01)i; **G05D 9/12**(2006.01)i

According to International Patent Classification (IPC) or to both national classification and IPC

**B.    FIELDS SEARCHED**

Minimum documentation searched (classification system followed by classification symbols)

H01M 50/609(2021.01); H01M 10/48(2006.01); H01M 10/52(2006.01); H01M 2/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 전해질(electrolyte), 주입량(injection amount), 토출량(discharge amount), 잔존량(residual amount)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2018-0080921 A (LG CHEM, LTD.) 13 July 2018 (2018-07-13)<br>See paragraphs [0040], [0046] and [0066]-[0097] and figures 2-3. | 1-2,8-9,16-17 |
| Y | | 6-7,13-15,20 |
| A | | 3-5,10-12,18-19 |
| Y | JP 3913291 B2 (TOSHIBA BATTERY CO., LTD.) 09 May 2007 (2007-05-09)<br>See paragraphs [0030] and [0034]-[0035]. | 6-7,13-15,20 |
| A | KR 10-2016-0084110 A (LG CHEM, LTD.) 13 July 2016 (2016-07-13)<br>See claims 1 and 4. | 1-20 |
| A | JP 07-326339 A (TOSHIBA BATTERY CO., LTD.) 12 December 1995 (1995-12-12)<br>See paragraphs [0011]-[0014]. | 1-20 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 January 2023** | **01 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/016042**

### C.      DOCUMENTS CONSIDERED TO BE RELEVANT

| Category* | Citation of document, with indication, where appropriate, of the relevant passages | Relevant to claim No. |
|---|---|---|
| A | KR 10-2017-0063250 A (LG CHEM, LTD.) 08 June 2017 (2017-06-08)<br>See entire document. | 1-20 |

Form PCT/ISA/210 (second sheet) (July 2022)

**INTERNATIONAL SEARCH REPORT**
Information on patent family members

International application No.

**PCT/KR2022/016042**

| Patent document cited in search report | | | Publication date (day/month/year) | Patent family member(s) | | | Publication date (day/month/year) |
|---|---|---|---|---|---|---|---|
| KR | 10-2018-0080921 | A | 13 July 2018 | KR | 10-2182688 | B1 | 24 November 2020 |
| JP | 3913291 | B2 | 09 May 2007 | JP | 10-064513 | A | 06 March 1998 |
| KR | 10-2016-0084110 | A | 13 July 2016 | KR | 10-1812844 | B1 | 27 December 2017 |
| JP | 07-326339 | A | 12 December 1995 | JP | 3073130 | B2 | 07 August 2000 |
| KR | 10-2017-0063250 | A | 08 June 2017 | KR | 10-2045478 | B1 | 15 November 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210154280